**Europäisches Patentamt**

(19) **European Patent Office**

**Office européen des brevets**

(11) Veröffentlichungsnummer : **0 063 768**
**B1**

(12) **EUROPÄISCHE PATENTSCHRIFT**

(45) Veröffentlichungstag der Patentschrift :
25.07.84

(21) Anmeldenummer : 82103246.3

(22) Anmeldetag : 17.04.82

(51) Int. Cl.³ : **C 08 L 27/06**, C 08 K 3/32

(54) **Eine Kupferverbindung enthaltende Polyvinylchloridmischung.**

(30) Priorität : 29.04.81 DE 3116969

(43) Veröffentlichungstag der Anmeldung :
03.11.82 Patentblatt 82/44

(45) Bekanntmachung des Hinweises auf die Patenterteilung : 25.07.84 Patentblatt 84/30

(84) Benannte Vertragsstaaten :
AT BE CH DE FR GB IT LI NL

(56) Entgegenhaltungen :
LU-A- 63 481
US-A- 3 845 001

(73) Patentinhaber : CHEMISCHE WERKE HÜLS AG
- RSP Patente / PB 15 - Postfach 13 20
D-4370 Marl 1 (DE)

(72) Erfinder : Schüler, Ralf, Dr.
Käthe-Kollwitz-Strasse 3
D-4350 Recklinghausen (DE)
Erfinder : Maahs, Günther, Dr.
Oderbruchstrasse 19
D-4370 Marl (DE)

**Beschreibung**

Vinylchloridpolymerisate, in harter wie auch in weicher Einstellung, finden zunehmend Anwendung als Konstruktionsteile in Gebäude- und Transportfahrzeugen sowie in Stoffen, Polsterungen und Tapeten. Dabei besteht ein Bedürfnis für eine verbesserte Brandschutzausrüstung sowie eine verminderte Rauchentwicklung im Falle eines Brandes.

Es wurde schon eine Vielzahl von Materialien vorgeschlagen, die zu diesem Zweck in Polyvinylchlorid eingearbeitet wurden, wobei jedoch nur sehr wenige als völlig befriedigend bezeichnet werden konnten. Viele dieser Verbindungen sind mit Polyvinylchlorid nicht verträglich, lassen sich schwer einarbeiten, führen zu intensiven Verfärbungen oder wirken sich nachteilig auf die physikalischen Eigenschaften von Polyvinylchlorid aus.

Oft genug wird auch nur eine rauchvermindernde Eigenschaft vorgetäuscht, weil die eingesetzten Produkte nur als Flammschutzmittel wirken und so die üblicherweise unter den Testbedingungen der NBS-Rauchkammer — eine der meistverwendeten Standardmethoden zur Bestimmung der Rauchdichte — unter flammenden Bedingungen höhere Rauchentwicklung von Polyvinylchlorid auf die niedrigeren Werte unter schwelenden Bedingungen reduziert. Eine Rauchreduzierung unter schwelenden Bedingungen wird nur selten beobachtet. Dies sollte jedoch von einem echten rauchvermindernden Zusatzstoff erwartet werden können.

In der früheren Patentliteratur werden immer wieder verschiedene Kupferverbindungen allein oder in Gemischen mit anderen Metallverbindungen als wirksame rauchvermindernde Additive beschrieben. In der US-PS 3 845 001 wird z. B. $Cu_2O$, auch in Gemischen mit $MoO_3$ oder Fe-Pulver, vorgeschlagen. Gemäß US-PS 3 903 028 wird $Cu_2O$ in Verbindung mit $Fe_2O_3$ eingesetzt. Sie führen jedoch alle zu einer erheblichen Verfärbung der Polymeren. Auch der Einsatz von Kupfersalzen in Form von Carboxylaten oder Z. B. von Acetylacetonat ist wegen der Zersetzung der Verbindungen bei den Einarbeitungstemperaturen und der damit verbundenen Verfärbung nicht geeignet. Die DE-OS 27 00 656 schlägt deshalb Kupferoxalat als rauchverminderndes Additiv vor. Das Kupferoxalat wird hier bei einer Temperatur von 163 °C eingearbeitet und das Polymere bei 177 °C zu Platten verpreßt. Bei den jedoch üblicherweise höheren Einarbeitungstemperaturen von etwa 190 bis 200 °C treten aber auch hier kräftige Verfärbungen nach grau-blau auf.

Überraschenderweise wurde nun festgestellt, daß eine Kupferverbindung enthaltende Polyvinylchloridmischungen, bei welchen das Polyvinylchlorid als Kupferverbindung ein Kupfer(II)-hydroxidphosphat der Zusammensetzung $Cu_3(PO_4)_2 \cdot Cu(OH)_2$ (= Libethenit) enthält, keine Verfärbung und auch bei höheren Einarbeitungstemperaturen keine Zersetzung zeigen. Das Kupfer(II)-hydroxidphosphat kann in Mengen von etwa 0,1 bis 20 Gewichtsteilen pro 100 Gewichtsteile Polyvinylchlorid enthalten sein. Selbst bei Konzentrationen von 20 Gewichtsprozent des betreffenden Kupfer(II)-hydroxidphosphat in einem mit üblichen Zusatzstoffen versehenem Polyvinylchlorid treten keine Verfärbungen auf.

Gleichzeitig konnte eine merkliche Rauchverminderung unter schwelenden wie auch flammenden Bedingungen, gemessen in der NBS-Rauchkammer, und auch eine Verminderung der Entflammbarkeit beobachtet werden.

Das Kupfer(II)-hydroxidphosphat wird normalerweise in Pulverform in Mengen von 0,1 bis 20 Gewichtsteilen, vorzugsweise von 1 bis 10 Gewichtsteilen, pro 100 Gewichtsteile Polyvinylchlorid, eingearbeitet.

Kupfer(II)-hydroxidphosphat kann durch Zutropfen von stöchiometrischen Mengen Ortho-Phosphorsäure zu einer wäßrigen Aufschlämmung von Kupfer(II)-hydroxidcarbonat der Formel $2\,CuCO_3 \cdot Cu(OH)_2$ bei 100 °C erhalten werden. Nach längerem Rühren unter Siedetemperatur wird das ausgefallene Produkt abgesaugt, gewaschen und bei 100 °C unter vermindertem Druck getrocknet. Das nach diesem Verfahren hergestellte Kupfer(II)-hydroxidphosphat hat die Zusammensetzung $Cu_3(PO_4)_2 \cdot Cu(OH)_2$. Es ist ein hellgrau-grünes, feines Pulver, das bis über 500 °C thermisch stabil ist. Andere Möglichkeiten der Darstellung sind beschrieben in Gmelins Handbuch der anorganischen Chemie, Band 60, Teil B, Seiten 920 bis 925.

Der Effekt der Rauchverminderung steigt mit fallendem mittlerem Korndurchmesser des eingesetzten Kupfer-II-hydroxidphosphates. Es ist daher angebracht, daß der mittlere Korndurchmesser des eingesetzten Kupfer-II-hydroxidphosphates 0,1 bis 100 µm, vorzugsweise 0,1 bis 50 µm und insbesondere 0,1 bis 20 µm beträgt.

Die Vinylchloridpolymerisate umfassen die Vinylchloridhomopolymeren, d. h. Polyvinylchlorid sowie die Copolymerisate, die Vinylchlorid und bis zu etwa 50 % wenigstens eines anderen Vinylidenmonomeren enthalten, das wenigstens eine endständige Gruppe der Formel $CH_2 = C <$ enthält, wie z. B. Ethylen, Propylen, höhere Olefine, Vinylester, Allylester, Acrylsäureester, Methacrylsäureester, Olefindicarbonsäuren, Acrylnitril. Zu den Vinylchloridpolymerisaten gehören ferner die chlorierten Vinylchloridpolymerisate und Gemische von diesen mit anderen kunststoffartigen und elastomeren Polymerisaten.

Die Art der Herstellung des Polyvinylchlorids ist ohne Belang. So läßt sich beispielsweise Suspensions-Polyvinylchlorid einsetzen, welches z. B. gemäß der Monographie von Kainer, Polyvinylchlorid und Vinylchlorid-Mischpolymerisate, Springer-Verlag, Berlin, Heidelberg, New York (1965), Seiten 12 bis 34, hergestellt wurde, oder Emulsions-Polyvinylchlorid, welches sich z. B. gemäß der gleichen Monographie, Seite 34 bis 59, herstellen läßt, oder Block Polyvinylchlorid, welches z. B. gemäß der gleichen Monographie, Seiten 7 bis 10, herzustellen ist.

Die Vinylchloridpolymerisate können mit den üblichen Mischungszusätzen, die dem Fachmann bekannt sind, wie z. B. Weichmachern, Gleitmitteln, Stabilisatoren, Füllstoffen, Farbstoffen, Verarbeitungshilfsstoffen sowie auch Flammschutzmitteln und dergleichen eingesetzt werden. Solche Zusatzstoffe werden in der o. a. Monographie von Kainer auf den Seiten 193 bis 329 beschrieben.

In den folgenden Beispielen ist die auf das Einsatzgewicht des Probenkörpers bezogene maximale Rauchdichte $D_m/g$, bestimmt in der NBS-Kammer, und die gegenüber einer Nullprobe verglichene prozentuale Rauchverminderung angegeben. Die NBS-Testmethode ist in der ASTM E-662 beschrieben. Probenplatten der Abmessungen $75 \times 75\,mm^2$ und etwa 1 mm Dicke werden senkrecht in einem Probenhalter mit Hilfe eines Heizstrahlers, der eine Heizleistung von $2,5\,W/cm^2$ an der Probenoberfläche erzeugt, zersetzt und der dabei erzeugte Rauch mit Hilfe eines optischen Meßsystems bestimmt. Neben diesen unter schwelenden Bedingungen erhaltenen Rauchdichten können durch zusätzliche auf die Probe gerichtete Zündflammen solche unter flammenden Bedingungen erhalten werden.

In den Beispielen 1, 2 und 4 wurde ein Kupfer-II-hydroxidphosphat mit einem mittleren Korndurchmesser von ca. 15 um eingesetzt.

Als Kenngröße für die Entflammbarkeit ist weiterhin der LOI-Wert (Limited Oxygen Index) nach ASTM-D 2863-77 aufgeführt. Der LOI-Wert ist die Sauerstoffkonzentration in Prozent, bei der ein Probenstäbchen, $3 \times 6$ mm dick und 150 mm lang, nach Entzündung mindestens 3 min selbständig weiterbrennt. Danach dürfen nicht mehr als 5 cm des Stäbchens verbrannt sein.

## Beispiel 1

Eine Vinylchloridpolymermischung wurde wie folgt hergestellt :
100 Gewichtsteile Granulat-PVC eines Standardtyps folgender Zusammensetzung

| | |
|---|---|
| 80 | Teile M-PVC |
| 20 | Teile E-PVC |
| 2,5 | Teile Bleiphosphit |
| 1,5 | Teile Bleistearat |
| 0,5 | Teile Calciumstearat |
| 1,8 | Teile Stearinsäure und -derivate |
| 12 | Teile Kreide |
| 6 | Teile Pigment (TiO$_2$ + Ruß) |

wurden auf der Walze bei 180 °C mit verschiedenen Mengen Kupfer(II)-hydroxidphosphat der Formel $Cu_3(PO_4)_2 \cdot Cu(OH)_2$ innig geknetet und danach zu 1 mm dicken Platten gepreßt. Diese Platten wurden auf $75 \times 75$ mm zugeschnitten und in der NBS-Rauchkammer unter Standardbedingungen mit und ohne Zündflamme zersetzt. Die Rauchentwicklung, gemessen über die Intensitätsabnahme eines Lichtstrahles, wurde mit Hilfe eines Schreibers verfolgt und daraus die maximale Rauchdichte bestimmt. In der folgenden Tabelle sind die Ergebnisse dieser Messungen sowie die Ergebnisse der Bestimmung des LOI-Wertes aufgeführt.

### Tabelle

| Teile Kupfer(II)-hydroxidphosphat | LOI | Rauchdichte | | | |
|---|---|---|---|---|---|
| | | schwelend | | flammend | |
| | | $D_m/g$ ($g^{-1}$) | Rauchverminderung | $D_m/g$ ($g^{-1}$) | Rauchverminderung |
| 0 | 44 | 21 | – | 37 | – |
| 0,5 | 43 | 20 | 5 % | 27 | 27 % |
| 1 | 44 | 19 | 10 % | 25 | 32 % |
| 2,5 | 48 | 17 | 19 % | 21 | 43 % |
| 5 | 54 | 14 | 33 % | 16 | 57 % |
| 10 | 60 | 9 | 57 % | 13 | 65 % |

## Beispiel 2

Um die überraschenden Vorteile der Verwendung von Kupfer(II)-hydroxidphosphat in Polyvinylchloridmischungen in bezug auf Verfärbungen des Materials zu veranschaulichen, wurden Polymermischungen folgender Zusammensetzung hergestellt : 100 Gewichtsteile des gleichen Polyvinylchlorids wie in Beispiel 1 und 2,5 Gewichtsteile Kupfer(II)-hydroxidphosphat bzw. vergleichsweise Kupferoxalat. Die Zusätze wurden bei 160 °C in das Polyvinylchlorid eingearbeitet und diese Mischung bei Temperaturen von 160 bis 210 °C jeweils um 10 °C steigend zu Platten gepreßt. Bei Kupfer(II)-hydroxidphosphat wurden keinerlei Verfärbungen festgestellt, Kupferoxalat jedoch zeigte eine mit der Temperatur stark steigende Verfärbung, bei 210 °C gepreßte Platten waren tief grau-blau.

## Beispiel 3

Zu Vergleichszwecken wurden Polymermischungen folgender Zusammensetzung hergestellt : 100 Gewichtsteile des gleichen Polyvinylchlorids wie in Beispiel 1 und jeweils 1 bis 10 Gewichtsteile Kupferoxalat. Die Mischung wurde entsprechend der DE-OS 27 00 656 bei 160 °C in das Polyvinylchlorid eingearbeitet und bei 170 °C zu 1 mm dicken Platten verpreßt. Von diesen Probenplatten wurde unter schwelenden wie flammenden Bedingungen die Rauchdichte bestimmt und mit den Werten aus Beispiel 1 verglichen. Die Ergebnisse sind in der folgenden Tabelle zusammengefaßt.

Tabelle

| Konzentration | schwelend | | | | flammend | | | |
|---|---|---|---|---|---|---|---|---|
| | Kupferoxalat | | Kupfer(II)-hydroxidphosphat | | Kupferoxalat | | Kupfer(II)-hydroxidphosphat | |
| | $D_B/g$ | Verm. | $D_B/g$ | Verm. | $D_B/g$ | Verm. | $D_B/g$ | Verm. |
| 1,0 | 20 | 5 % | 19 | 10 % | 29 | 22 % | 25 | 32 % |
| 2,5 | 18 | 15 % | 17 | 20 % | 26 | 30 % | 21 | 43 % |
| 5,0 | 15 | 30 % | 14 | 35 % | 24 | 35 % | 16 | 57 % |
| 10,0 | 15 | 30 % | 9 | 57 % | 23 | 38 % | 13 | 65 % |
| 0 Vergleichsprobe | 21 | | | | 37 | | | |

## Beispiel 4

Entsprechend dem Beispiel 1 wurden aus einem weichgemachten Polyvinylchlorid etwa folgender Zusammensetzung

70 Teile S-PVC
30 Teile DOP-Weichmacher
 2 Teile Bleistearat
10 Teile Chlorparaffin
13 Teile Kreide

und verschiedenen Anteilen Kupfer(II)-hydroxidphosphat Probenplatten hergestellt und die Rauchentwicklung sowie der LOI-Wert bestimmt. Die Ergebnisse sind in der folgenden Tabelle aufgeführt.

Tabelle

| Teile Kupfer(II)-hydroxidphosphat pro 100 Teile PVC | LOI | Rauchdichte | | | |
|---|---|---|---|---|---|
| | | schwelend | | flammend | |
| | | $D_B/g$ $(g^{-1})$ | Rauchverminderung | $D_B/g$ $(g^{-1})$ | Rauchverminderung |
| 0 | 24 | 64 | - | 58 | - |
| 1 | 23 | 58 | 9 % | 53 | 9 % |
| 2,5 | 24 | 59 | 8 % | 51 | 12 % |
| 5 | 25 | 56 | 13 % | 43 | 26 % |
| 10 | 26 | 50 | 22 % | 35 | 40 % |

0 063 768

## Ansprüche

1. Eine Kupferverbindung enthaltende Polyvinylchloridmischung, dadurch gekennzeichnet, daß das Polyvinylchlorid als Kupferverbindung ein Kupfer(II)-hydroxidphosphat der Zusammensetzung $Cu_3(PO_4)_2 \cdot Cu(OH)_2$ enthält.

2. Polymermischung nach Anspruch 1, dadurch gekennzeichnet, daß das Kupfer(II)-hydroxidphosphat in Mengen von etwa 0,1 bis 20 Gewichtsteilen pro 100 Gewichtsteile Polyvinylchlorid enthalten ist.

3. Polymermischung nach Anspruch 1 oder 2, dadurch gekennzeichnet, daß der mittlere Korndurchmesser des Kupfer-II-hydroxidphosphates 0,1 bis 100 μm beträgt.

4. Polymermischung nach Anspruch 1 oder 2, dadurch gekennzeichnet, daß der mittlere Korndurchmesser des Kupfer-II-hydroxidphosphates 0,1 bis 50 μm beträgt.

5. Verwendung einer Kupferverbindung der Formel $Cu_3(PO_4)_2 \cdot Cu(OH)_2$ als rauchverminderndes Additiv für Polyvinylchloridmischungen.

6. Verwendung der Kupferverbindung nach Anspruch 3 in Mengen von 0,1 bis 20 Gewichtsprozent, bezogen auf Polyvinylchlorid.

7. Verwendung nach Anspruch 5 oder 6, dadurch gekennzeichnet, daß der mittlere Korndurchmesser des Kupfer-II-hydroxidphosphates 0,1 bis 100 μm beträgt.

8. Verwendung nach Anspruch 5 oder 6, dadurch gekennzeichnet, daß der mittlere Korndurchmesser des Kupfer-II-hydroxidphosphates 0,1 bis 50 μm beträgt.

## Claims

1. A vinylchloride polymer mixture containing a copper compound, characterised in that the vinyl chloride polymer contains a basic copper(II) phosphate of the composition $Cu_3(PO_4)_2 \cdot Cu(OH)_2$ as copper compound.

2. A polymer mixture according to claim 1, characterised in that the basic copper(II) phosphate is present in an amount of about 0.1 to 20 parts by weight per 100 parts by weight of vinylchloride polymer.

3. A polymer mixture according to claim 1 or 2, characterised in that the average particle size of the basic copper(II) phosphate is from 0.1 to 100 μm.

4. A polymer mixture according to claim 1 or 2, characterised in that the average particle size of the basic copper(II) phosphate is from 0.1 to 50 μm.

5. The use of a copper compound of the formula $Cu_3(PO_4)_2 \cdot Cu(OH)_2$ as a smoke-reducing additive for vinylchloride polymer mixtures.

6. The use of the copper compound according to claim 5 in an amount of from 0.1 to 20 percent by weight, based on vinylchloride polymer.

7. A use according to claim 5 or 6, characterised in that the average particle size of the basic copper phosphate is from 0.1 to 100 μm.

8. A use according to claim 5 or 6, characterised in that the average particle size of the basic copper phosphate is from 0.1 to 50 μm.

## Revendications

1. Mélange de polychlorure de vinyle contenant un composé de cuivre, caractérisé par le fait que le polychlorure de vinyle contient comme composé de cuivre un hydroxyde-phosphate de cuivre(II) de composition $Cu_3(PO_4)_2 \cdot Cu(OH)_2$.

2. Mélange de polymère selon la revendication 1, caractérisé par le fait que l'hydroxyde-phosphate de cuivre(II) est contenu à raison d'environ 0,1 à 20 parties en poids par 100 parties en poids de polychlorure de vinyle.

3. Mélange de polymère selon l'une des revendications 1 et 2, caractérisé par le fait que le diamètre moyen de grain de l'hydroxyde-phosphate de cuivre(II) est de 0,1 à 100 μm.

4. Mélange de polymère selon l'une des revendications 1 et 2, caractérisé par le fait que le diamètre moyen de grain de l'hydroxyde-phosphate de cuivre(II) est de 0,1 à 50 μm.

5. L'utilisation d'un composé de cuivre de formule $Cu_3(PO_4)_2 \cdot Cu(OH)_2$ comme additif de diminution de fumées pour mélanges de polychlorure de vinyle.

6. L'utilisation du composé de cuivre selon la revendication 5, à raison de 0,1 à 20 % en poids relativement au polychlorure de vinyle.

7. L'utilisation selon l'une des revendications 5 et 6, caractérisée par le fait que le diamètre moyen de grain de l'hydroxyde-phosphate de cuivre(II) est de 0,1 à 100 μm.

8. L'utilisation selon l'une des revendications 5 et 6, caractérisé par le fait que le diamètre moyen de grain de l'hydroxyde-phosphate de cuivre(II) est de 0,1 à 50 μm.